# EUROPÄISCHE PATENTANMELDUNG

(11) **EP 3 406 671 A1**
(43) Veröffentlichungstag der Anmeldung: **28.11.2018**
(21) Anmeldenummer: 17172440.4
(22) Anmeldetag: 23.05.2017
(51) Int. Cl.: C09C 1/00, C08K 3/00

(54) **BEHANDLUNG VON VANADIUMGELB PIGMENTEN MIT KOHLENHYDRATBASIERTEN SYNDETEN ZUR VERBESSERUNG DER IONENRESISTENZ IN ALKALISCHEM MILIEU**

(71) Anmelder: Evonik Degussa GmbH, 45128 Essen (DE)
(72) Erfinder: CAVALEIRO, Pedro, Dr., 41749 Viersen (DE); BOUWMAN, Matthias, 40476 Düsseldorf (DE); SENTER, Pascal, 47229 Duisburg (DE)

(57) **Zusammenfassung**

Gegenstand der Erfindung sind Zusammensetzungen umfassend Bismutvanadat (BiVO₄) enthaltende partikuläre Pigmente, die mit O-funktionalisierten Kohlenhydraten oder Gemischen von O-funktionalisierten Kohlenhydraten umhüllt sind. Die O-funktionalisierteren Kohlenhydrate werden als Syndete bezeichnet und verbessern die Farbstabiliät der Bismutvanadat enthaltenden Pigmente gegenüber ionischen Einflüssen, wie insbesondere alkalischen Einflüssen. Des Weiteren können die wasserunlöslichen Pigmente durch die Umhüllung nun leicht in Wasser homogen dispergiert werden.

## Beschreibung

Gegenstand der Erfindung sind Zusammensetzungen umfassend Vanadiumgelb Pigmenten, die mit kohlenhydratbasierten Syndeten umhüllt sind und eine verbesserte Ionenresistenz aufweisen. Ferner ist Gegenstand der Erfindung die Verwendung von kohlenhydratbasierten Syndeten für diesen Zweck als auch Zusammensetzungen umfassend Bismutvanadat (BiVO₄) enthaltende partikuläre Pigmente, die mit O-funktionalisierten Kohlenhydraten, Kohlenhydraten oder Gemischen von O-funktionalisierten Kohlenhydraten umhüllt sind. Dabei bildet das Kohlenhydrat das Glycon und vorzugsweise ein Fettalkohol oder eine Fettsäure das Agycon im O-funktionalisierten Kohlenhydrat.

Die O-funktionalisierteren Kohlenhydrate werden als Syndete bezeichnet und verbessern die Farbstabiliät der Bismutvanadat enthaltenden Pigmente gegenüber ionischen Einflüssen, wie insbesondere alkalischen Einflüssen. Des Weiteren können die wasserunlöslichen Pigmente aufgrund ihrer Umhüllung nun leicht in Wasser homogen dispergiert werden.

Zur optischen Gestaltung von vor allem im Außenbereich lackierten oder angestrichenen Flächen, Bauten oder Gegenständen werden anorganische Pigmente aufgrund ihrer im Vergleich zu der Gruppe der organischen Pigmente meist höheren Stabilität gegenüber UV Strahlung und Witterungseinflüssen seit Jahrzenten eingesetzt.

Während in der Anfangszeit der Farbentwicklung anorganische Pigmente aus Metallverbindungen, zum Beispiel von Blei, Cadmium oder Chrom, eingesetzt wurden, wird gegenwärtig verstärkt nach Alternativen gestrebt. Antriebsmotor dieser Umstellung sind gefestigte Erkenntnisse über gesundheitliche und umwelttechnische Gefahren der schwermetallhaltigen Pigmente, die sowohl bei der Herstellung der Pigmente und den diese enthaltenden Farben, als auch bei der Verwendung und Entsorgung dieser, zu vermeidbaren Belastungen der beteiligten Personen und der Umwelt führen.

Eine Vielzahl verschiedener Substanzen findet heute Verwendung als witterungsbeständige Farbpigmente. Neben altbekannten, in großen Mengen eingesetzten Verbindungen, wie z.B. Eisenoxiden in verschiedenen Varianten und Farbtönen, Ultramarinen und Zirkonsilikaten, werden seit den 1970er Jahren auch Pigmente auf Basis von Bismut und Vanadium produziert.
Diese sind vor allem im Farbbereich von gelb bis orange vertreten und können damit kritische Bleichromate und Cadmiumsulfide zumindest teilweise ersetzen.

US5851587A und US4115141A beschreiben die Herstellung solcher Bismut und Vanadium basierter Pigmente.

Jedoch sind mit dem Einsatz solcher Pigmente auch Nachteile gegenüber den altbewährten Pigmenten aus Cadmium und Bleiverbindungen verbunden.

So ist unter anderem von Hugh M. Smith in "High Performance Pigments" von mangelnder Beständigkeit gegenüber hohen pH-Werten der genannten Pigmente aus Bismut und Vanadium die Rede.

In US5976238A wird erwähnt, dass sowohl Bismut als auch Vanadium im Kristallgitter durch andere Ionen ausgetauscht werden können.

Es konnte gezeigt werden, dass dieser Ionenaustausch unter bestimmten Bedingungen auch an handelsüblichen Vanadiumgelb Pigmenten stattfindet und mit ihm ein Farbwechsel erfolgt. Grundsätzlich sind in der Farben- und Lack-verarbeitenden Industrie Farbtonveränderungen aufgrund äußerer Einflüsse stets unerwünscht, da der Farbton ein wesentliches und qualitätsbestimmendes Merkmal einer Beschichtung darstellt.

Bismutvanadat Pigmente sind in Wasser und Alkali unlöslich. Ungeschützte Bismutvanadat Pigmente in Wandfarben auf stark alkalischen Untergründen, wie Zement, erfahren eine Farbveränderung durch einen Ionenaustausch, indem Ionen aus dem Zement in die Pigmente migrieren und Ionen in Gitterplätzen ausgetauscht werden.

Es gibt eine Reihe von Methoden, Bismut- und Vanadium-haltige Pigmente mit verbesserter Stabilität gegenüber äußeren Einflüssen, wie Hitze, Säure und Laugen, herzustellen. US4063956A beschreibt den Einsatz von Silizium zur Verbesserung der Beständigkeit gegen Hitze.

US4851049A nennt die Verwendung von zirkoniumhaltigen Ummantelungen auf Vanadiumgelb Pigmenten als bekanntes Verfahren um u.a. die Säurebeständigkeit der Pigmente zu erhöhen.

Gemäß der US4063956A werden die Bismutvanadat Pigmente mit einer oder mehreren Schichten aus Siliziumoxid, Aluminiumoxid, Titanoxid und Boroxid umhüllt.

Nichtsdestotrotz ist die Beständigkeit der Bismut- und Vanadium-haltigen Pigmenten eine anhaltende Herausforderung und bedarf weiterer Optimierung.

Es bestand daher die Aufgabe, eine Pigmentummantelung zu entwickeln, die die genannten Verbindungen insbesondere gegenüber hohen pH-Werten stabilisiert. Des Weiteren bestand die Aufgabe Pigmentummantelungen bereitzustellen, die die wasserunlöslichen Pigmente gut in Wasser dispergierbar machen, um eine vorzugsweise homogene Verteilung der umhüllten Pigmente in wasserbasierten Farbformulierungen, Lackformulierungen etc. sicherzustellen. Des Weiteren bestand die Aufgabe aus nachwachsenden Rohstoffen und biologisch verträgliche Pigmentummantelungen bereitzustellen, die vorzugsweise definiert biologisch abbaubar sind, und die Bismutvanadat Pigmenten eine gute Ionenresistenz verleihen.

Überraschenderweise wurde gefunden, dass die vorgenannten Aufgaben gelöst werden durch den Einsatz kohlenhydrathaltiger Syndete gemäß Anspruch 1 sowie durch die Verwendung nach Anspruch 15. Hergestellt werden können die mit den kohlenhydrathaltigen Syndeten umhüllten Bismutvanadat enthaltenden Pigmente gemäß dem Verfahren nach Anspruch 13. Weitere Ausgestaltungen und bevorzugte Ausführungsformen sind in den Unteransprüchen sowie detailliert in der Beschreibung offenbart.

Gegenstand der Erfindung sind daher Zusammensetzungen umfassend Bismutvanadat (BiVO₄) enthaltende Pigmente, wobei die Bismutvanadat enthaltenden Pigmente als Partikel vorliegen, die mit O-funktionalisierten Kohlenhydraten oder Gemischen von O-funktionalisierten Kohlenhydraten umhüllt sind, und die O-funktionalisierten Kohlenhydrate ausgewählt sind aus Ethern- und/oder Estern von Kohlenhydraten, insbesondere aus Zuckerethern, in denen die nicht glykosidische(n) OH-Gruppe(n) verethert sind, Glykosiden und Zuckerestern. Die Kohlenhydrate sind ausgewählt aus Monosacchariden, Oligosacchariden, Zuckeralkoholen, Zuckersäuren und Lactonen der Zuckersäuren. Die Oligosaccharide sind ausgewählt aus Oligosacchariden, die zwei bis zehn Monosaccharide aufweisen, vorzugsweise weisen die Oligosaccharide zwei bis 6 Monosaccharide auf.

Die O-funktionalisierten Kohlenhydrate werden vorliegend auch als Syndete bzw. kohlenhydrathaltige Syndete bezeichnet. In den erfindungsgemäßen Ether- und/oder Ester-O-funktionalisierten Kohlenhydraten bildet die Ether- oder Ester-Gruppe das Aglycon und der Kohlenhydrat-Rest das Glycon. Das Glycon, also der Kohlenhydrat-Rest der O-funktionalisierten Kohlenhydrate, ist hydrophil und vorzugsweise wasserlöslich während die Ether- oder Ester-Gruppen vorzugsweise hydrophob ist. Methoden zur Herstellung der Ether- und/oder Ester-O-funktionalisierten Kohlenhydrate sind u.a. offenbart in US4297290A, US3021324A und WO01/46375A1.

Entsprechend einer bevorzugten Ausführungsform sind Zusammensetzungen bevorzugt, in denen a) die Ether der O-funktionalisierten Kohlenhydrate ausgewählt sind aus Ethern von aliphatischen Alkoholen mit 1 bis 36 C-Atomen, insbesondere gesättigte oder ungesättigte aliphatische, lineare, verzweigte oder cyclische Alkohole mit 1 bis 36 C-Atomen, insbesondere mit 1 bis 20 C-Atomen.
Die aliphatischen Alkohole können eine Alkyl-, Alken- oder Alkin-Gruppe mit 1 bis 36 C-Atomen, insbesondere mit 1 bis 20 C-Atomen umfassen. Bevorzugt ist mindestens ein O-Alkyl-funktionalisiertes Kohlenhydrat, das vorzugsweise ausgewählt ist aus O-Alkyl-funktionalisierten Monosacchariden, O-Alkyl-funktionalisierten Oligosacchariden, wobei die Alkyl-Gruppe 1 bis 36 C-Atomen aufweist, insbesondere 1 bis 20 C-Atomen, die linear, verzweigt oder cyclisch sein kann. Bevorzugt sind Monoalkohole.

Ebenso sind nach einer Ausführungsform Zusammensetzungen bevorzugt, in denen b) die Ester der O-funktionalisierten Kohlenhydrate ausgewählt sind aus Estern von aliphatischen Carbonsäuren mit 1 bis 36 C-Atomen, bevorzugt sind gesättigte oder ungesättigte aliphatische, lineare, verzweigte oder cyclische Carbonsäuren mit 1 bis 36 C-Atomen.
Besonders bevorzugt sind gesättigte oder ungesättigte Carbonsäuren mit 1 bis 20 C-Atomen. Nach einer besonders bevorzugten Alternative sind die O-funktionalisierten Kohlenhydrate ausgewählt aus O-Acyl-funktionalisierten Kohlenhydraten, die vorzugsweise ausgewählt sind aus O-Acyl-funktionalisierten Monosacchariden, O-Acyl-funktionalisierten Oligosacchariden. Lineare, verzweigte oder cyclische gesättigte Acyl-Gruppen mit 1 bis 36 C-Atomen sind bevorzugt, besonders bevorzugt sind 1 bis 20 C-Atomen. Gleichfalls bevorzugt sind gemischt funktionalisierte Kohlenhydrate wie c) Ether und Ester von O-funktionalisierten Kohlenhydraten der unter a) und b) genannten aliphatischen Alkohole und aliphatischen Carbonsäuren mit 1 bis 36 C-Atomen. Die Carbonsäuren können Omegaalicyclische Fettsäuren umfassen. Bevorzugt sind Monocarbonsäuren.

Nach besonders bevorzugten Varianten werden die O-funktionalisierten Kohlenhydrate hergestellt aus Kohlenhydraten und aliphatischen Alkoholen mit 1 bis 36 C-Atomen, insbesondere Monoalkoholen. Bevorzugte aliphatische Alkoholen mit 1 bis 36 C-Atomen sind ausgewählt aus linearen Fettalkoholen, verzweigten Fettalkoholen, ungesättigten Fettalkoholen, vorzugsweise aus einfach ungesättigten Fettalkoholen und mehrfach ungesättigten Fettalkoholen. Die Ester des O-funktionalisierten Kohlenhydrats sind vorzugsweise ausgewählt aus Fettsäuren, vorzugsweise Monofettsäuren, besonders bevorzugt aus linearen Fettsäuren, verzweigten Fettsäuren, ungesättigten Fettsäuren, vorzugsweise einfach ungesättigten Fettsäuren, mehrfach ungesättigten Fettsäuren.

Nachfolgend werden die erfindungsgemäß verwendbaren Kohlenhydrate zur Herstellung der O-funktionalisierten Kohlenhydrate bzw. die Kohlenhydrate genannt, die als O-funktionalisierter Rest unter Abspaltung eines Wassermoleküls aus den -OH-Gruppen im Kohlenhydrat und dem aliphatischen Alkohol oder der aliphatischen Carbonsäure vorliegen:
(i) Monosaccharide umfassend Aldosen, wie Aldobiosen, Aldotriosen, Aldo-tetrosen, Aldopentosen, Aldohexosen, Ketosen, wie Ketotriose, Ketotetrosen, Keto-pentosen, Ketohexosen, ringförmige Halbacetale und/oder ringförmige Halbketale, wie insbesondere D-/L-Glycerinaldehyl, d-/L-Erythrose, D-/L-Threose, L-Arabinose, D-Ribose, D-Xylose, D-Lyxose, D-Glucose, L-Glucose, D-Mannose, L-Mannose, D-Galactose, L-Galactose, D-Fructose, L-Fructose, D-Allose, D-Altrose, D-Idose, D-Talose, D-Erythrulose, D-Ribulose, D-Xylulose, D-Psicose, D-Fructose, D-Sorbose, D-Tagatose, und ringförmige Monosaccharide umfassend α-D-Glukose, β-D-Glucose, α-D-Fructopyranose, β-D-Fructo-pyranose, β-D-Glucopyranose, β-D-Mannopyranose, a-D-Galactopyranose, D-Thyminose, L-Rhamnose, Digitoxose, D-Digitalose, D-Digitalose, D-Cymarose, L-Oleandrose,
(ii) Oligosaccharide umfassend Disaccharide, Trisaccharide, Tetrasaccharide, Pentasaccharide, Hexasaccharide, Heptasaccharide, Ocatasaccharide, Nonasaccharide und Decasaccharide, bevorzugt sind Di- bis Hexasaccharide, besonders bevorzugt sind Dibis Tetrasaccharide,
(iii) Zuckeralkohole umfassend D-Sorbit, D-Mannit, Dulcit,
(iv) Zuckersäuren umfassend D-Gluconsäure, D-Zuckersäure, D-Mannozuckersäure, Schleimsäure, D-Gluconsäuren, sowie die entsprechenden Lactone der genannten Zuckersäuren.

Spezifisch bevorzugte O-funktionalisierte Kohlenhydrate sind ausgewählt aus aliphatischen Alkyl-O-Zuckerethern mit 1 bis 36 C-Atomen in der Alkyl-Gruppe, wie Ether an der nicht glykosidischen OH-Gruppe oder auch Ether an der glykosidischen OH-Gruppe, Glykoside mit 1 bis 36 C-Atomen in der Alkyl-Gruppe, Zuckerestern mit 1 bis 36 C-Atomen in der Acyl-Gruppe und Gemischen der vorgenannten Verbindung. Erfindungsgemäß bevorzugt sind O-funktionalisierte Kohlenhydrate, die ausgewählt sind aus Alkyl-O-D-Glucopyranosiden mit 1 bis 36 C-Atomen in der Alkyl-Gruppe, insbesondere mit 4 bis 20 C-Atomen in der Alkyl-Gruppe. Ebenfalls besonders bevorzugt sind Alkyl-D-Glucopyranoside mit 8 bis 10 C-Atomen in der Alkyl-Gruppe, oder Alkyl-D-Glucopyranoside mit 10 bis 16 C-Atomen in der Alkyl-Gruppe, wie Decyl-D-Glucopyranosid, Octyl-D-Glucopyranosid. Als Zuckerether, insbesondere an einer nicht glykosidischen OH-Gruppe, als Glykoside und Zuckerester sind jene von Monosacchariden und Disacchariden sowie Gemischen der vorgenannten Verbindungen bevorzugt. Häufig werden die vorgenannten Verbindungen auch als Alkylpolyglucoside bezeichnet.

Ebenfalls können Glucoside, Mannoside, Fructoside, Furanoside, Pyranoside, wie Methyl-α-D- oder Methyl-β-D-glucopyranosid, Methyl-α-D- oder Methyl-β-D-glucofuranosid, Methyl-α-D- oder Methyl-β-D-fructofuranosid, Ethyl-α-D-glucopyranosid oder Ethyl-β-D-glucopyranosid als O-funktionelle Kohlenhydrate zur Umhüllung von Bismutvanadat enthaltenden Pigmenten in der Zusammensetzung vorliegen.

Als glycosidische Bindung oder glykosidische Bindung wird die chemische Bindung zwischen dem anomeren Kohlenstoffatom eines Kohlenhydrats (Glycon) und dem Hetero- oder seltener dem Kohlenstoffatom eines Aglycons oder einem zweiten Zuckermolekül bezeichnet. Glycoside (glycosidische Bindung zwischen Glycon und Aglycon) sind in der Natur weit verbreitet. Wenn das Aglycon ein Alkohol ist, dann stammt das Brücken-Sauerstoffatom vom Aglycon.

Besonders bevorzugte Zusammensetzungen umfassen Ether, die ausgewählt sind aus glycosidischen Monosacchariden und glycosidischen Oligosacchariden, vorzugsweise aus glycosidischen Disacchariden, fructosidischen Monosaccharide, die vorzugsweise als O-Glycoside von Alkoholen, insbesondere von Fettalkoholen vorliegen.

Besonders bevorzugte Umhüllungen von Bismutvanadat enthaltenden Pigmenten sind O-funktionalisierte Kohlenhydrate umfassend (i) Cetearyl-Glucoside, Ethylhexyl-Glucoside, Methylglucose Isostearat, Cetyl-Glucosid, Stearyl-Glucosid, Caprylyl-Glucosid, Lauryl-Glucosid, Cacryl-Glucoside, Myristyl Glucoside, Decyl-Glucoside, Coco-Glucoside (Kokosglucosid, Alkylpolyglucoside auf Basis von Kokosöl und Glucose) und/oder (ii) Sorbitan Laurat, Sorbitan Stearat, Sorbitan Tristearat, Sorbitan Laurat, Sorbitan Sesquicaprylat, Sucrose Stearat.

Der Gehalt des O-funktionalisierten Kohlenhydrats oder des Gemisches dieser in der Zusammensetzung der umhüllten, partikulären Bismutvanadat enthaltende Pigmente liegt vorzugsweise von 0,05 bis 50 Gew.-% und der Gehalt von Bismutvanadat von 99,95 bis 50 Gew.-% in der Gesamtzusammensetzung, bevorzugt sind 10 bis 30 Gew.-% an O-funktionalisiertem Kohlenhydrat zu 90 bis 70 Gew.-% Bismutvanadat, besonders bevorzugt sind 20 bis 30 Gew.-% an O-funktionalisiertem Kohlenhydrat zu 80 bis 70 Gew-% Bismutvanadat. Vorzugsweise umfassen die Zusammensetzungen 25 Gew.-% an O-funktionalisiertem Kohlenhydrat zu 75 Gew-% Bismutvanadat, mit jeweils unabhängig plus/minus 2 Gew.-%. Die O-funktionellen Kohlenhydrate bilden dabei eine Umhüllung um die Bismutvanadat enthaltenden partikulären Pigmente.

Fettalkohol umfassen 1-Hexanol, 1-Heptanol, 1-Octanol, 1-Decanol, 1-Dodecanol (Lauryalkohol), 1-Tetradecanol (Myristylalkohol), 1-Hexadecanol (Cetylalkohol), 1-Heptadecanol (Margarylalkohol), 1-Octadecanol (Stearylalkohol), 1-Eicosanol (Arachidylalhohol), 1-Docosanol (Behenylalkohol), 1-Tetracosanol (Lignocerylalkohol), 1-Hexacosanol (Cerylalkohol), 1-Octacosanol (Montanylalkohol), 1-Triacontanol (Melissylalkohol), *cis*-9-Hexadecen-1-ol (Palmitoleylalkohol), *cis*-9-Octadecen-1-ol (Oleylalkohol), *trans*-9-Octadecen-1-ol (Elaidylalkohol), *cis*-11-Octadecen-1-ol, *cis*,*cis*-9,12-Octadecadien-1-ol (Linoleylalkohol), 6,9,12-Octadecatrien-1-ol (y-Linolenylalkohol).

Fettsäuren umfassen Ameisensäure, Essig-, Butter-, Isobutan-, Valerian-, Isovalerian-, Capron-, Önanth-, Capryl-, 2-Ethylcapron-, Pelargon-, Caprin-, Laurin-, Myristin-, Myristolein-, Palmitin-, Palmitolein-, Stearin-, Öl-, Elaidin-, Rhizinus-, Linol-, Linolen-, Eleostearin-, Arachidin-, Behen- oder Erucasäure.

Des Weiteren ist eine Zusammensetzung mit wasserlöslichen, O-funktionalisierten Kohlenhydraten oder Gemischen von O-funktionalisierten Kohlenhydraten, die als Umhüllung von Bismutvanadat enthaltenden Pigmenten vorliegen, bevorzugt. Als wasserlöslich gilt ein O-funktionalisiertes Kohlenhydrat mit einer Löslichkeit von größer gleich 100 g bis kleiner gleich 1500 g/L in Wasser bei 20 °C, vorzugsweise von größer gleich 500 g bis kleiner 1200 g/L bei 20 °C.

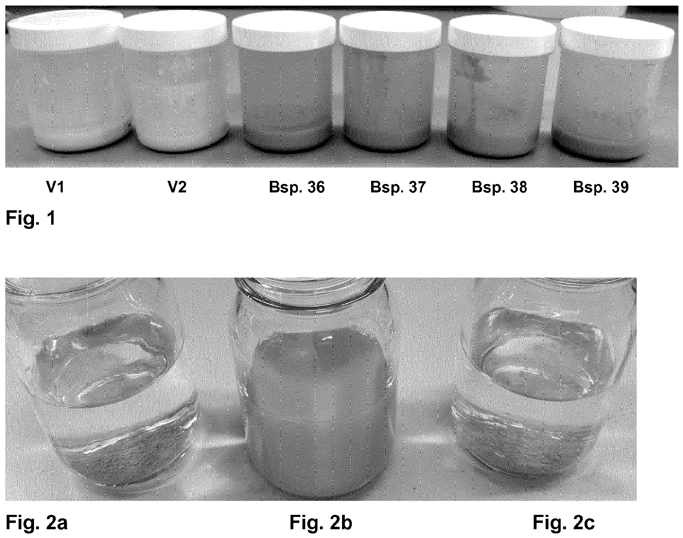

Die Zusammensetzung umfassend Bismutvanadat (BiVO₄) enthaltende mit O-funktionalisierten Kohlenhydraten oder Gemischen von mit O-funktionalisierten Kohlenhydraten umhüllten Pigmente lassen sich besonders gut in Wasser oder auch Wasser enthaltenden Gemischen mit anderen Lösemitteln dispergieren, wie in Figur 2b dargestellt.

Die O-funktionellen Kohlenhydrate, hier synonym zu Syndete, umfassen u.a. die Reaktionsprodukte von:
A) einem oder mehreren Kohlenhydraten der Summenformel (I)

   CₙH₂ₙOₙ (I)

   mit n = 1 bis 36
B) einem oder mehreren Fettalkohol(en) der allgemeinen Formeln
   (II), (III) oder (IV): CₙH₂ₙ₊₁OH (II), bzw. CₙH₂ₙ₋₁OH (III), bzw. CₙH₂ₙ₋₅OH (IV); jeweils mit n = 1 bis 36 C-Atome, vorzugsweise 1 bis 20 C-Atomen, die kovalent über eine Etherbindung an das vorgenannte Kohlenhydrat angebunden werden.
A) Umfasst bevorzugt eine Verbindung der Monosaccharide, Biosen oder Alditole und B) ist vorzugsweise ein linearer oder verzweigter gesättigter oder einfach- bis mehrfach ungesättigter Fettalkohol.

Beispiele für solche Verbindungen finden sich in US4297290 A, US3021324 A und WO2001046375 A1. Die O-funktionellen Kohlenhydrate zur Herstellung der Umhüllung der partikulären Pigmente können in einer Formulierung vorliegen, wie beispielsweise auf Zeolithen geträgert, oder als Formulierung die optional weitere Additive enthält.

Eine besonders bevorzugte Ausführungsform der vorliegenden Erfindung umfasst O-funktionelle Kohlenhydrate mit mindestens einer oder mehreren aliphatischen Alkyl- oder Acyl-Gruppe(n), bevorzugt jeweils mit 1 bis 34 C-Atomen, vorzugsweise jeweils einer oder mehrer identischer Alkyl- oder Acyl-Gruppen oder von Gemischen von unterschiedlichen Gruppen und einem Kohlenhydrat-Rest bestehend aus Mono- oder Disacchariden, wie zum Beispiel Glycose, Fructose, Galactose, Saccharose, Lactose oder Maltose, oder deren Mischungen.

Das Verhältnis der Ether- oder Ester-Gruppe der aliphatischen Alkohole oder der aliphatischen Carbonsäuren zum Kohlenhydratrest liegt vorzugsweise im Bereich von 90:10 bis 10:90, vorzugsweise von 30:70 bis 70:30 in Gewichtsanteilen, besonders bevorzugt im Bereich von 40:60 bis 60:40.

Das molare Verhältnis der Ether- oder Ester-Gruppe der aliphatischen Alkohole oder der aliphatischen Carbonsäuren zum Kohlenhydratrest liegt vorzugsweise im Bereich 0,3 zu 1 bis 3 zu 1, bevorzugt von 1 zu 1, vorzugsweise mit jeweils unabhängig plus/minus 0,5, vorzugsweise plus/minus 0,15.

Besonders bevorzugt sind O-funktionalisierte Kohlenhydrate, die in der Lage sind den L* Wert der L+a*b*-Werte gemäß dem CIE-Lab System der mit O-funktionalisierten Kohlenhydrate umhüllten Bismutvanadat enthaltenden Pigmente im Bereich von kleiner gleich 76, vorzugsweise kleiner gleich 72, besonders bevorzugt kleiner gleich 70, kleiner gleich 67 einzustellen.

Ebenso ist Gegenstand der Erfindung eine Zusammensetzung mit Bismutvanadat enthaltenden Pigmenten, die als Partikel mit O-funktionalisierten Kohlenhydraten oder Gemischen von O-funktionalisierten Kohlenhydraten umhüllt vorliegen, wobei
a) die Differenz (dL) des Wertes L nach dem CIE-Lab-System vor und nach einer Lagerung der Pigmente über 7 Tage bei 18 bis 23 °C in einer wässrigen Erdalkali-Ionen und/oder Alkali-Ionen enthaltenden Lösung als Suspension, insbesondere einer 10 Gew.-%igen wässrigen Erdalkali-Ionen und/oder Alkali-Ionen Lösung, vorzugsweise in einem geschlossenen Gefäß, bestimmt als dL = L (vor Lagerung) - L (nach Lagerung) einen Wert von dL = 18 bis 0 aufweist, insbesondere von 15 bis 0, bevorzugt von 10 bis 0, besonders bevorzugt von 8 bis 0, und/oder
b) die Differenz (dL) des Wertes L nach dem CIE-Lab-System einer getrockneten Schicht enthaltend die Pigmente oder einer Schicht der Pigmente, optional in einer Formulierung, vor und nach einem Kontakt mit einer wässrigen Erdalkali-Ionen und/oder Alkali-Ionen enthaltenden Lösung bei erhöhter Temperatur, insbesondere nach einem Kontakt mit einer 10 Gew.-%igen wässrigen Erdalkali-Ionen und/oder Alkali-Ionen Lösung über 1 Stunde, insbesondere bei erhöhter Temperatur, vorzugsweise bei ca. 70 bis 80°C, bestimmt als dL = L (vor Kontakt) - L (nach Kontakt) einen Wert von dL = 18 bis 0 aufweist, insbesondere von 15 bis 0, bevorzugt von 10 bis 0, besonders bevorzugt von 8 bis 0, und/oder
c) die Differenz (dL) des Wertes L nach dem CIE-Lab-System (i) vor und nach einem Kontakt mit einer wässrigen Erdalkali-Ionen und/oder Alkali-Ionen enthaltenden Lösung mit einem pH-Wert größer gleich 9, oder (ii) vor oder nach einer Lagerung in Gegenwart einer wässrigen Erdalkali-Ionen und/oder Alkali-Ionen enthaltenden Lösung mit einem pH-Wert größer gleich 9 bestimmt als (i) dL = L (vor Kontakt) - L (nach Kontakt) einen Wert von dL = 18 bis 0 oder (ii) dL = L (vor Lagerung) - L (nach Lagerung) einen Wert von dL = 18 bis 0 aufweist. Bevorzugt sind Werte für dL von 15 bis 0, bevorzugt 10 bis 0, besonders bevorzugt 8 bis 0. Der pH-Wert beträgt vorzugsweise von pH = 8 bis 14, insbesondere größer gleich 10, bevorzugt größer gleich 11, besonders bevorzugt größer gleich 12, größer gleich 13, vorzugsweise bis pH = 14.

Gegenstand der Erfindung ist die erfindungsgemäße Verwendung der O-funktionalisierten Kohlenhydrate bzw. kohlenhydratbasierten Syndete als Umhüllung bzw. Beschichtungsstoff für Bismut und Vanadium enthaltende Pigmente zur Steigerung der Beständigkeit gegenüber einem alkalischen Milieu und der darin enthaltenden Fremdionen.

Bismut und Vanadium enthaltende Pigmente können dabei jeglicher Natur sein, sei es in Reinform als BiVO₄, oder in einer Modifikation mit mindestens einem weiteren Element wie zum Beispiel Aluminium, Silizium, Eisen oder Phosphor.

Die erfindungsgemäßen Zusammensetzungen können als Bismutvanadat (BiVO₄) enthaltende Pigmente optional zusätzlich einen Gehalt an Molybdän, Wolfram, Molybdän-Oxid, Wolfram-Oxid, Aluminium, Phosphor, Zirkon und/oder Eisen und Gemische der vorgenannten Komponenten enthalten.

Als weitere Bismutvanadate, die mit den erfindungsgemäßen O-funktionalisierten Kohlenhydraten umhüllt sein können, seien die folgenden genannt: BiVO₄; Bi₂AO₆ mit A = Mo oder W, 4BiVO₄ • 3Bi₂MoO₆, BiVO₄.xBi₂zO₆, z = Mo oder W, x = 0 = 2,5; BiVO₄.xBi₂MoO₆, x = 0,2 bis 2,5, BiVO₄.x²Bi₂ MoO₆.yBi₂ WO₆ mit x² = 0,6 bis 2,25 und y = 0 bis 0,1, Bi[(V_{1-b}P_{b})O₄] in der b = 0 bis 0,1 bedeutet, insbesondere mit b = 0,001 bis 0,08, bevorzugt b = 0,01 bis 0,06; b = 0,002 bis 0,01, Bi_{c}Fe_{d}EᵥV(1-_{w})P_{w}O_{z} I in der die Variablen folgende Bedeutung haben: E Calcium, Zink, Cer, Praseodym und/oder Silicium, insbesondere Zink, Calcium und/oder Cer; c = 0,8 bis 1,2; d > 0 bis 0,1, wenn v > 0 ist, und ≥ 0,035 bis 0,1, wenn v = 0 ist; v ≥ 0 bis 0,2; w > 0 bis 0,1; z Zahl der Sauerstoffatome zur Erfüllung der Valenzerfordernisse der Kationen, insbesondere c = 0,9 bis 1,1; d = 0,005 bis 0,07; v = 0,01 bis 0,15; w > 0 bis 0,05; mit z Zahl der Sauerstoffatome zur Erfüllung der Valenzerfordernisse der Kationen sowie generell Bismutvanadat enthaltenden gelbfärbende bis orangefärbende Pigmente

Ein klassisches Bismutvanadat ist unter der Bezeichnung C.I. Pigment Yellow 184 und der CAS Nr. 14059-33-7 bekannt. Natürlich vorkommende Mineralien mit Bismutvanadat sind Pucherite, Clinobisvanite und Dreyerite.

Die Zusammensetzungen können neben den Bismutvanadat enthaltenden mit O-funktionellen Pigmenten umhüllten Pigmenten zusätzlich weitere Pigmente enthalten und als Gemisch vorliegen. Beispielsweise genannt werden einige organische Pigmente, wie Pigment gelb 13, Pigment gelb 14, Pigmente gelb 17, Pigment gelb 55, Pigment gelb 83, Pigment orange 34 (3H-Pyrazol-3-one, 4,4'-[(3,3'-dichloro[ 1,1'-biphenyl]-4,4'-diyl)bis(azo)]bis[2,4-dihydro- 5-methyl-2-(4-methylphenyl), (CAS.-Nr: 15793-73-4), Pigment orange 36 (Butanamid, 2-[(4-chloro-2-nitrophenyl)azo]-N-(2,3-dihydro-2-oxo-1 H-benzimidazol-5-yl)-3-oxo-), Pigment orange 73 (CAS.-NR: 084632-59-7), Pigment orange 34.

Ebenfalls bevorzugt sind Zusammensetzungen mit Bismutvanadat (BiVO₄) Partikeln von mit O-funktionalisierten Kohlenhydraten umhüllten partikulären Pigmenten deren reine Bismutvanadatpartikel, d.h. ohne Umhüllung, eine Partikelgrößenverteilung von d₅₀ größer gleich 0,1 µm bis 10 µm aufweisen, vorzugsweise von 0,1 µm bis 5 µm, besonders bevorzugt von 0,1 µm bis 4 µm, besonders bevorzugt ist eine Partikelgrößenverteilung von d₉₀ größer gleich 0,1 µm bis 10 µm, vorzugsweise von 0,1 µm bis 5 µm, besonders bevorzugt von 0,1 µm bis 4 µm, besonders bevorzugt ist eine Partikelgrößenverteilung von d₉₉ größer gleich 0,1 µm bis 10 µm, vorzugsweise von 0,1 µm bis 5 µm, besonders bevorzugt von 0,1 µm bis 4 µm.

Die Umhüllung der Pigmente mit O-funktionellen Kohlenhydraten erfolgt mindestens als Monolayer, vorzugsweise in mehreren Schichten.

Ebenso Gegenstand der Erfindung ist ein Verfahren zur Herstellung der Zusammensetzung sowie eine Zusammensetzung erhältlich nach dem Verfahren umfassend mit O-funktionalisierten Kohlenhydraten oder Gemischen von O-funktionalisierten Kohlenhydraten umhüllte Bismutvanadat enthaltende Pigmente, indem O-funktionalisierte Kohlenhydrate oder Gemischen von O-funktionalisierten Kohlenhydraten, die ausgewählt sind aus Ethern- und/oder Estern von Kohlenhydraten, wie Zuckerether, Glykoside und/oder Zuckerestern, wobei die Kohlenhydrate ausgewählt sind aus Monosacchariden, Oligosacchariden mit zwei bis zehn Monosacchariden, Zuckeralkoholen, Zuckersäuren und Lactonen der Zuckersäuren, in Gegenwart eines protischen Fluides, vorzugsweise Wasser, mit partikulär vorliegenden Bismutvanadat enthaltenden Pigmenten gemischt werden, vorzugsweise intensiv gemischt werden. Die Partikelgrößenverteilung der unbeschichteten Pigmente entspricht vorzugsweise den vorgenannten Bereichen. Das Mischen erfolgt vorzugsweise mit 100 bis 10000 Umdrehungen/Minute. Als protisches Fluid gelten auch Alkohole oder wässrige Gemische mit organischen Lösemitteln.

Ebenso Gegenstand der Erfindung sind Formulierungen geeignet als Beschichtungsstoffe enthaltend eine erfindungsgemäße Zusammensetzung oder eine Zusammensetzung erhältlich nach dem Verfahren umfassend mindestens ein Bindemittel, Wasser sowie optional Additive, Lösemittel und/oder Pigmente. Vorzugsweise ist die Formulierung eine Streichfarbe.

Ferner ist Gegenstand der Erfindung die Verwendung von O-funktionalisierten Kohlenhydraten, die ausgewählt sind aus Ethern- und/oder Estern von Kohlenhydraten, sowie von vorzugsweise unsubstituierten Kohlenhydraten, wie Glucose, Sorbit, Saccharose oder Gemischen dieser zur Umhüllung von partikulären Bismutvanadat enthaltenden Pigmenten und vorzugsweise zum Schutz der Pigmente vor einem Ausbleichen, insbesondere durch alkalische Verbindungen.

Als erfindungsgemäße Kohlenhydrate gelten insbesondere die folgenden: Monosaccharide, wie α-D-Ribofuranose, β-D-Fructofuranose, α-D-Mannopyranose, α-L-Rhamnopyranose (6-Desoxy-α-L-mannopyranose); Cellobiose (1-β-D-Glucopyranosyl-4-β-D-glucopyranosid), Maltose (1-α-D-Glucopyranosyl-4-α-D-Glucopyranose), Glucose, auch Traubenzucker oder seltener Dextrose, Mannose, ein Epimer der Glucose, Fructose, auch Fruchtzucker, Ribose, Teil der Ribonukleinsäure (RNA), Desoxyribose, Galactose, auch Schleimzucker, Fucose, ein L-Zucker, Rhamnose, ein L-Zucker, Disaccharide, wie Saccharose, auch Rübenzucker oder Rohrzucker (Glucose + Fructose), Trehalose, Lactose, auch Milchzucker (Glucose + Galactose), Lactulose, ein synthetisch abgewandelter Milchzucker, Maltose, auch Malzzucker (Glucose + Glucose), Trehalose, ein nicht-reduzierender Zucker (Glucose + Glucose), Dreifachzucker (Trisaccharide), Melezitose, Trisaccharid u. a. im Honig, Raffinose, bleibt bei der Zucker-Raffination in der Melasse, Umbelliferose sowie auch α-Cyclodextrin.

Der Schutz der behandelten Pigmente bezieht sich dabei auf jegliches alkalische Milieu, wie es durch Alkali oder Erdalkalilaugen oder anderen basisch reagierenden Substanzen hervorgerufen werden kann. Als Fremdionen gelten insbesondere zweiwertige, positiv geladene Ionen aus der Gruppe der Erdalkalien, aber auch Metallionen das Zink, Eisen oder andere.

Die erfindungsgemäß umhüllten und daher geschützte Pigmente sind auch in Formulierungen, wie in Beschichtungsstoffen, Druckfarben und/oder Drucklacken, Kunststoffen oder ähnlichem vor einem alkalischen Milieu geschützt. Die erfindungsgemäß geschützten Pigmente können daher auch in der Matrix von Kunststoffen oder vorzugsweise Polyholz eingesetzt werden.

Beispiele für Beschichtungsstoffe im Sinne der vorliegenden Erfindung sind Farben, Lacke, Druckfarben und sonstige Beschichtungsstoffe, wie lösemittelhaltige Lacke und lösemittelfreie Lacke, Pulverlacke, UV-härtbare Lacke, Low-Solids, Medium-Solids, High-Solids, Automobillacke, Holzlacke, Einbrennlacke, 2K-Lacke, Metallbeschichtungsstoffe und Tonerzusammensetzungen. Weitere Beispiele für Beschichtungsstoffe werden in "Bodo Müller, Ulrich Poth, Lackformulierung und Lackrezeptur, Lehrbuch für Ausbildung und Praxis, Vincentz Verlag, Hannover (2003), 73 - 287" genannt.

Beispiele für Druckfarben und/oder Drucklacke im Sinne der vorliegenden Erfindung sind lösemittelbasierende Druckfarben, Flexodruckfarben, Tiefdruckfarben, Buchdruck- bzw. Hochdruckfarben, Offsetdruckfarben, Litho-Druckfarben, Druckfarben für den Verpackungsdruck, Siebdruckfarben, Drucktinten, wie Drucktinten für Tintenstrahldrucker, Ink Jet Tinte, Drucklacke, wie Überdrucklacke.

Beispiele für Druckfarben- und/oder Drucklackformulierungen werden in "E.W. Flick, Printing Ink and Overprint Varnish Formulations - Recent Developments, Noyes Publications, Park Ridge NJ, (1990), S. 2 -107" genannt.

### Ausführunasbeispiele:

### Erfindungsgemäße Stoffe

**Tabelle 1:**

| | **Produkt** | **INCI (nachfolgend als Syndet bezeichnet)** |
|---|---|---|
| 1 | TEGO Care C 90 | Cetearyl Glucoside |
| 2 | TEGO Tens G 826 | Ethylhexyl Glucoside |
| 3 | TEGO SML | Sorbitan Laurat |
| 6 | TEGO SMS | Sorbitan Stearat |
| 7 | TEGO STS | Sorbitan Tristearat |
| 8 | TEGO Care LTP | Sorbitan Laurat |
| 11 | ISOLAN IS | Methylglucose Isostearat |
| 12 | ANTIL SOFT SC | Sorbitan Sesquicaprylat |
| 13 | TEGO Care SE 121 | Sucrose Stearat |
| 14 | Glucopon® 425 N | Caprylyl Glucoside |
| 15 | GLUCOPON® 600 UP | Lauryl Glucoside |
| 16 | Glucopon® 225 DK | Caprylyl/Capryl Glucoside |
| 17 | GLUCOPON® 420 UP | Caprylyl Glucoside (and) Myristyl Glucoside |
| 18 | Glucopon® 215 UP | Caprylyl Glucoside (and) Decyl Glucoside |
| 19 | Glucopon® 650 EC | Coco-Glucoside |
| 20 | | Saccharose |
| 21 | | Methylglykosid |
| 22 | | Sorbit |

### Beispiel 1

Die erfindungsgemäßen Stoffe können auf verschiedene Wege auf die Pigmentoberflächen aufgebracht werden. Die Benetzung der Pigmente findet aufgrund einer dem Fachmann bekannten Affinität der Syndete zu hydrophoben Oberflächen, besonders in Gegenwart von Wasser, rasch statt. Exemplarisch sei hier die Benetzung in einer dualen asymmetrischen Zentrifuge genannt, viele andere Standardverfahren zur Mischung von Feststoffen und Flüssigkeiten sind möglich.

10g Vanadiumgelb (Vanadiumgelb der Fa. Cappelle, Belgien, namentlich Lysopac Orange 6820B) wurden mit 2,7g kohlenhydratbasiertem Syndet 1 bzw. O-funktionalisiertem Kohlenhydrat und 2g Wasser in einer dualen asymmetrischen Zentrifuge (Hauschild DAC 150 FVZ) für 3min bei 2500rpm vermischt. Die dabei entstehende Reibungswärme und damit einhergehende Viskositätsreduzierung des kohlenhydratbasierten Syndets begünstigt den Mischprozess. Das feuchte Gemisch wurde für 16h bei 60°C im Standard-Umluftofen von Wasser befreit. Als letzter Schritt wurde das modifizierte Vanadiumgelb in einer Messermühle (Retsch Grindomix GM200) für 10 Sekunden bei 10000rpm vermahlen.

### Beispiele 2 bis 22:

Beispiel 1 wurde unter Verwendung der in Tabelle 1 aufgeführten Edukte wiederholt.

**Tabelle 2:**

| **Bsp.** | **KBS¹** | **Menge [g] KBS¹** | **Menge [g] Vanadiumgelb (VDG)** | **Menge [g] Wasser** | **Gew.Verhältnis KBS:VDG** |
|---|---|---|---|---|---|
| 1 | 1 | 2,7 | 10 | 2 | 21,2:78,8 |
| 2 | 2 | 2,7 | 10 | 2 | 21,2:78,8 |
| 3 | 3 | 2,7 | 10 | 2 | 21,2:78,8 |
| 6 | 6 | 2,7 | 10 | 2 | 21,2:78,8 |
| 7 | 7 | 2,7 | 10 | 2 | 21,2:78,8 |
| 8 | 8 | 2,7 | 10 | 2 | 21,2:78,8 |
| 11 | 11 | 2,7 | 10 | 2 | 21,2:78,8 |
| 12 | 12 | 2,7 | 10 | 2 | 21,2:78,8 |
| 13 | 13 | 2,7 | 10 | 2 | 21,2:78,8 |
| 14 | 14 | 2,7 | 10 | 2 | 21,2:78,8 |
| 15 | 15 | 2,7 | 10 | 2 | 21,2:78,8 |
| 16 | 16 | 2,7 | 10 | 2 | 21,2:78,8 |
| 17 | 17 | 2,7 | 10 | 2 | 21,2:78,8 |
| 18 | 18 | 2,7 | 10 | 2 | 21,2:78,8 |
| 19 | 19 | 2,7 | 10 | 2 | 21,2:78,8 |
| 20 | 20 | 2,7 | 10 | 2 | 21,2:78,8 |
| 21 | 21 | 2,7 | 10 | 2 | 21,2:78,8 |
| 22 | 22 | 2,7 | 10 | 2 | 21,2:78,8 |

| | | | | | |
|---|---|---|---|---|---|
| ¹ Kohlenhydrat basiertes Syndet (KBS) | | | | | |

### Nichterfindungsgemäße Vergleichsbeispiele

Als Vergleichsbeispiel **V1** wird kommerziell verfügbares Vanadiumgelb der Fa. Cappelle, Belgien, namentlich Lysopac Orange 6820B (unbeschichtetes Vanadiumgelb) eingesetzt. Vergleichsbeispiel **V2** ist ein nach nichterfindungsgemäßer Methode geschütztes Vanadiumgelb, Lysopac Orange 6821 B (V2 ist anorganisch umhüllt).

### Anwendunastechnische Beispiele

### Prüfverfahren:

Die mit kohlenhydratbasierten Syndeten, d.h. O-funktionalisierten Kohlenhydraten, belegten Vanadiumgelb Pigmente wurden in 10%iger Natriumhydroxidlösung suspendiert.

Da die nichterfindungsgemäß modifizierten Vanadiumgelb Pigmente eine gewisse Resistenz gegenüber reiner Natronlauge zeigen, nicht aber gegen Fremdkationen (besonders der 2. Hauptgruppe) in alkalischer Lösung, wurden dem Testgemisch typische Füllstoffe beigemischt. In Tabelle 3 sind die verwendeten Füllstoffe aufgelistet.

Das Verhältnis von Vanadiumgelb Pigment zu Füllstoff/NaOH Lösung (10%ig) wurde in allen Versuchen konstant gehalten (1:1:15).

**Tabelle 3: Füllstoffe**

| **Rohstoff** | **Zusammensetzung** |
|---|---|
| Millicarb OG | CaCO₃ |
| Blance fixe micro | BaSO4 |
| Mondo Finntalc M10E SQ | Mg₃Si₄O₁₀(OH)₂ |
| Quarzwerke Wollastonitmehl Tremin 939-100 ESST | Ca₃[Si₃O₉] |
| Norzinco Zinkweis Harzsiegel Standard | ZnO |

### Herstellung:

Die Rezepturbestandteile werden gemäß den vorstehenden Rezepturen in transparenten 20ml Schraubdeckeldosen eingewogen und auf einem neoLab Taumel-Rollenmischer für 5 Minuten homogenisiert. Die Proben werden anschließend bei Raumtemperatur gelagert.

### Prüfmethoden:

Um die Leistungsfähigkeit der kohlenhydratbasierten Syndete zu bewerten, wurde die erhaltende Farbstärke nach einer Woche Lagerung bei Raumtemperatur (im geschlossenen Gefäß) gemessen.

### Farbmessung:

Die Farbmessung der Reaktionsmischung erfolgte mit einem Gerät der Firma X-Rite (Typ: X-Rite SP 60). Um die Farbwerte erfassen zu können, mussten die Reaktionsgemische fotografiert werden, um anschließend auf den ausgedruckten Bildern Messungen vornehmen zu können. Dazu mussten die Fotografier- und Druckbedingungen definiert werden. Die Fotografien wurden von der Seite, in einem möglichst weit von Tageslichtfenstern entfernten Abzug bei eingeschalteter Beleuchtung aufgenommen. Es wurde mit einer PRAKTIKA LM16-Z24S im Aufnahmemodus "Blume" fotografiert. Die Bilder wurden unbearbeitet auf einem SHARP MX-2640N PCL6 in Standard Qualität gedruckt.

Von allen Proben wurden die sogenannten L*a*b*-Werte gemäß des CIE-Lab-Systems (CIE = Commission Internationale de l'Eclairage) bestimmt. Das CIE-Lab-System ist als ein dreidimensionales System zur quantitativen Beschreibung der Farborte nützlich. Darin sind auf einer Achse die Farben Grün (negative a-Werte) und Rot (positive a*-Werte) aufgetragen, auf der dazu im rechten Winkel angeordneten Achse die Farben Blau (negative b*-Werte) und Gelb (positive b*-Werte). Der Wert C* setzt sich aus a* und b* wie folgt zusammen: C* = (a*2+b*2)0,5 und wird zur Beschreibung von violetten Farborten verwandt. Die beiden Achsen kreuzen sich im Unbuntpunkt. Die vertikale Achse (Unbuntachse) ist maßgebend für die Helligkeit von Weiß (L = 100) bis Schwarz (L = 0). Mit dem CIE-Lab-System können nicht nur Farborte, sondern auch Farbabstände durch die Angabe der drei Koordinaten beschrieben werden.

### Farbmessungen der Kohlenhydrat basierten Syndete der Beispiele 1 bis 22:

**Tabelle 4: Vergleich herkömmliches Vanadiumgelb, nichterfindungsgemäß behandeltes Vanadiumgelb (Vergleichsbeispiele V1 und V2) und erfindungsgemäß vorbehandeltes Vanadiumgelb (KBS 1 bis 22).**

| **Kohlenhydrat basiertes Syndet (KBS)** | **L nach Lagerung** | **L vor Lagerung** | **dL** |
|---|---|---|---|
| 1 | 73,55 | 60,23 | 13,32 |
| 2 | 70,03 | 60,99 | 9,04 |
| 3 | 76,71 | 60 | 16,71 |
| 6 | 70,83 | 60,14 | 10,69 |
| 7 | 68,56 | 60,24 | 8,32 |
| 8 | 71,93 | 59,97 | 11,96 |
| 11 | 70,14 | 60,6 | 9,54 |
| 12 | 68,35 | 59,69 | 8,66 |
| 13 | 71,48 | 60,15 | 11,33 |
| 14 | 63,9 | 60,94 | 2,96 |
| 15 | 65,5 | 60,38 | 5,12 |
| 16 | 64,59 | 59,96 | 4,63 |
| 17 | 62,65 | 59,8 | 2,85 |
| 18 | 61,09 | 60,37 | 0,72 |
| 19 | 61,23 | 60,01 | 1,22 |
| 20 | 71,02 | 59,64 | 11,38 |
| 21 | 72,72 | 60,08 | 12,64 |
| 22 | 75,54 | 60,97 | 14,57 |
| | | | |
| V 1 | 83,11 | 60,33 | 22,78 |
| V 2 | 81,05 | 60,15 | 20,90 |

Gewünscht sind hier geringe L* (Helligkeitswerte), die ein Bestehenbleiben des orangenen Farbtons der festen Bestandteile des Reaktionsgemisches zeigen, d.h. der mit O-funktionalisierten Kohlenhydraten umhüllten Bismutvanadat enthaltenden Pigmente in Gegenwart von wässriger 10 Gew.-%iger NaOH Lösung. Es zeigt sich, dass die erfindungsgemäß eingesetzten kohlenhydratbasierten Syndeten gegenüber den nicht erfindungsgemäßen Vergleichsbeispielen geringere L*-Werte und damit eine höhere Farbtonstabilität, erkennbar in dem geringeren dL = L vor Test - L nach Test gewährleisten.

### Anwendungsbeispiele:

Des Weiteren wurden die erfindungsgemäßen Pigmente mit kohlenhydratbasierten Syndeten 1 bis 22 der Tabelle 2 mit den nicht erfindungsgemäßen Vergleichsbeispielen in einer handelsüblichen Außenfassadenfarbe getestet.

Es wird die Farbtonerhaltung nach Belastung mit heißer Natronlauge (10% NaOH in Wasser) auf der fertigen Beschichtungsoberfläche, nach der in den vorstehenden Beispielen beschriebenen Verfahren, der Farbtonmessung (L Wert) bewertet.

**Tabelle 5: Rezeptur der weißen Außenwandfarbe**

| **Rohstoff** | **Gewichtsprozent %** | **Beschreibung** |
|---|---|---|
| Deionisiertes Wasser | 33,05 | |
| Tego Foamex 855 | 0,20 | Entschäumer |
| ACTICIDE MBS | 0,15 | Biozid |
| CALGON N new | 0,05 | Wasserenthärter |
| TEGO Dispers 715 W | 0,30 | Dispergieradditiv |
| AMP-90 | 0,10 | 2-Amino-2-methyl-1-propanol |
| KRONOS 2310 | 12,5 | TiO₂ |
| SOCAL P 3 | 10,00 | CaCO₃ |
| OMYACARB 5 GU | 15,00 | CaCO₃ |
| OMYACARB 2 GU | 10,00 | CaCO₃ |
| Glimmer MICA TG | 3,00 | Muskovit; K Al₂ [AlSi₃O₁₀(OH)₂] |
| SIPERNAT 820 A | 2,00 | SiO₂ |
| DOWANOL DPnB | 1,00 | Lösemittel |
| ACRONAL S 790 | 12,00 | Bindemittel |
| RHEOLATE 278 | 0,65 | Rheologieadditiv |
| SUMME | 100,00 | |

Die Fremdionen, die in Beispiel 23 - 40 der Tabelle 6 in Form von beschichtungstypischen Füllstoffen zugesetzt wurden, befinden sich in diesem Beispiel homogen verteilt in der Beschichtungsformulierung.

Diesem Gemisch werden 5g Vanadiumgelb Pigment bzw. 5 + Xg, d.h. 5g * 0,1 bis 100%, X = 0,0005 bis 5g, der erfindungsgemäß behandelten Pigmente, wobei X für die Menge des zum Schutz eingesetzten kohlenhydrathaltigen Syndets steht, zugegeben und für 10 Minuten mit einer Schergeschwindigkeit von 10m/s mittels eines DISPERMAT CV der Firma Getzmann eingerührt. Die Trocknung des mit 150 µm mittels Rakel applizierten Systems erfolgt über 7 Tage bei Raumtemperatur.

Zur Abprüfung der Bismut und Vanadium Pigment-haltigen Beschichtungen auf Farbtonstabilität gegenüber alkalischem Milieu und Fremdionen wurde eine 10 Gew.-%ige Natriumhydroxidlösung angesetzt. Diese wurde auf 80°C erwärmt und jeweils 5ml der heißen Natronlauge auf die horizontal liegende, durchgetrocknete Beschichtung getropft. Die Flüssigkeit soll dabei so auf die Beschichtung aufgebracht werden, dass sie ohne sich zu zerteilen als zusammenhängende Ansammlung auf der Beschichtung ruht. Um eine Aufkonzentration der Natronlauge durch Verdunstung zu minimieren, wird alsbald ein dem Volumen der Natronlauge angepasstes Gefäß über die Lauge gestellt.

Das Verfahren wird bei allen Proben gleich angesetzt und die Belastungsdauer für 60 Minuten genau eingehalten.

Danach wird die Natronlauge durch einen Kaltwasserstrahl komplett von der Beschichtung gewaschen.

Die Auswertung erfolgt über die in Beispiel 23 - 40 beschriebene Methode, direkt auf der belasteten, vollständig abgetrockneten Stelle der Beschichtung.

Wie bereits in Tabelle 4 deutlich wurde, zeigen die erfindungsgemäßen Verbindungen ein auffallend anderes Eigenschaftsprofil gegenüber den nicht erfindungsgemäßen Vergleichsbeispielen, der Art, dass nur mit erfindungsgemäßen behandelten Pigmenten der Farbton nach Belastung wie aus Tabelle 6 ersichtlich erhalten bleibt.

**Tabelle 6: Erfindungsgemäße KBS Anwendungsbeispiele sowie Anwendungsbeispiele der Vergleichsbeispiele V1 und V2**

| **Beispiel** | **Kohlenhydratbasiertes Syndet (KBS)** | **L nach Kontakt** | **L vor Kontakt** | **dL** |
|---|---|---|---|---|
| 23 | 1 | 71,88 | 59,64 | 12,24 |
| 24 | 2 | 71,22 | 59,12 | 12,10 |
| 25 | 3 | 75,99 | 60,01 | 15,98 |
| 28 | 6 | 70,65 | 60,25 | 10,40 |
| 29 | 7 | 68,37 | 60,41 | 7,96 |
| 30 | 8 | 71,66 | 59,99 | 11,67 |
| 33 | 11 | 69,36 | 60,49 | 8,87 |
| 34 | 12 | 68,79 | 58,56 | 10,23 |
| 35 | 13 | 71,04 | 59,87 | 11,17 |
| 36 | 14 | 63,12 | 59,31 | 3,81 |
| 37 | 15 | 65,98 | 60,1 | 5,88 |
| 34 | 16 | 64,1 | 59,27 | 4,83 |
| 35 | 17 | 62,01 | 60,07 | 1,94 |
| 36 | 18 | 61,88 | 60,58 | 1,30 |
| 37 | 19 | 60,99 | 59,89 | 1,10 |
| 38 | 20 | 71,52 | 60,2 | 11,32 |
| 39 | 21 | 71,22 | 59,5 | 11,72 |
| 40 | 22 | 75 | 59,66 | 15,34 |
| | | | | |
| Vergleichsbeispiel | V 1 | 83,99 | 59,38 | 24,61 |
| Vergleichsbeispiel | V 2 | 80,44 | 59,77 | 20,67 |

Die vorstehenden Versuche belegen die Wirksamkeit der O-funktionellen Kohlenhydrate als schützende Umhüllung für Bismutvanadat enthaltende partikuläre Pigmente gegenüber einem Ausbleichen in Gegenwart von Alkali- und/oder Erdalkali. Aufgrund der vorstehenden Messergebnisse zeigt sich, dass die Alky-O-funktionellen Kohlenhydrate, insbesondere die Glycoside von Fettalkoholen mit L* Werten von 60,99 bis 65,98 eine besonders hohe Farbstabilität der behandelten Pigmente ermöglichen. Aber auch die Sorbitan Ester von Fettsäuren zeigen als Acyl-O-funktionelle Kohlenhydrate, gute L* Werte im Bereich von 68,35 bis 71,93 eine gute Farbstabilität der behandelten Pigmente.

Figur 1 zeigt visualisiert die Messergebnisse der Beispiele 36, 37, 38 und 39 gegenüber den Ergebnissen der anwendungstechnischen Vergleichsbeispiele 1 und 2 der Tabelle 6.

Das unterschiedliche Verhalten der Bismutvanadat Pigmente eines VG 1, eines erfindungsgemäß umhüllten und einer physikalischen Mischung mit O-funktionellen Kohlenhydraten in Wasser sind in den Figuren 2a, 2b und 2c dargestellt. Die Figur 2a zeigt das Verhalten der unmodifizierten Bismutvanadat Pigmente des VG1 in Wasser, die als unlöslicher Niederschlag ausfallen. Figur 2c zeigt eine rein physikalische Mischung der Pigmente und der O-funktionalisierten Kohlenhydrate in Wasser ohne Umhüllung der Pigmente mit den O-funktionalisierten Kohlenhydraten. Die homogene Verteilung der wasserlöslichen, erfindungsgemäß mit den O-funktionalisierten Kohlenhydraten umhüllten Bismutvanadat Pigmente (Syndet: Pigment, 21,2 Gew.-% zu 78;8:Gew.-%) in Wasser ist in Figur 2b sehr gut erkennbar.

## Patentansprüche

1. Zusammensetzung umfassend Bismutvanadat (BiVO₄) enthaltende Pigmente, **dadurch gekennzeichnet, dass** die Bismutvanadat enthaltende Pigmente als Partikel vorliegen, die mit O-funktionalisierten Kohlenhydraten oder Gemischen von O-funktionalisierten Kohlenhydraten umhüllt sind, wobei die O-funktionalisierten Kohlenhydrate ausgewählt sind aus Ethern- und/oder Estern der Kohlenhydrate, wobei die Kohlenhydrate ausgewählt sind aus Monosacchariden, Oligosacchariden, wobei die Oligosaccharide ausgewählt sind aus Oligosacchariden die zwei bis zehn Monosaccharide aufweisen, Zuckeralkoholen, Zuckersäuren und Lactonen der Zuckersäuren.

2. Zusammensetzung nach Anspruch 1, **dadurch gekennzeichnet, dass**
a) die Ether der O-funktionalisierten Kohlenhydrate ausgewählt sind aus Ethern von aliphatischen Alkoholen mit 1 bis 36 C-Atomen,
b) die Ester der O-funktionalisierten Kohlenhydrate ausgewählt sind aus Estern von aliphatischen Carbonsäuren mit 1 bis 36 C-Atomen, und/oder
c) Ether und Ester von O-funktionalisierten Kohlenhydraten der unter a) und b) genannten aliphatischen Alkohole und aliphatischen Carbonsäuren mit 1 bis 36 C-Atomen.

3. Zusammensetzung nach Anspruch 2, **dadurch gekennzeichnet, dass** die
a) aliphatischen Alkoholen mit 1 bis 36 C-Atomen ausgewählt sind aus linearen Fettalkoholen, verzweigten Fettalkoholen und ungesättigten Fettalkoholen,
b) die Ester des O-funktionalisierten Kohlenhydrats ausgewählt sind aus linearen Fettsäuren, verzweigten Fettsäuren und ungesättigten Fettsäuren.

4. Zusammensetzung nach einem der Ansprüche 1 bis 3, **dadurch gekennzeichnet, dass** die Kohlenhydraten ausgewählt sind aus
(i) Monosacchariden umfassend Aldosen, Ketosen, ringförmige Halbacetale und/oder ringförmige Halbketale, wie insbesondere D-/L-Glycerinaldehyl, D-/L- Erythrose, D-/L-Threose, L-Arabinose, D-Ribose, D-Xylose, D-Lyxose, D-Glucose, L-Glucose, D-Mannose, L-Mannose, D-Galactose, L-Galactose, D-Fructose, L-Fructose, D-Allose, D-Altrose, D-Idose, D-Talose, D-Erythrulose, D-Ribulose, D-Xylulose, D-Psicose, D-Fructose, D-Sorbose, D-Tagatose, und ringförmige Monosaccharide umfassend α-D-Glukose, β-D-Glucose, α-D-Fructopyranose, β-D-Fructopyranose, β-D-Glucopyranose, β-D-Mannopyranose, α-D-Galactopyranose, D-Thyminose, L-Rhamnose, Digitoxose, D-Digitalose, D-Digitalose, D-Cymarose, L-Oleandrose,
(ii) Oligosacchariden, wobei die Oligosaccharide umfassen Disaccharide, Trisaccharide, Tetrasaccharide, Pentasaccharide, Hexasaccharide, Heptasaccharide, Ocatasaccharide, Nonasaccharide und Decasaccharide,
(iii) Zuckeralkoholen umfassend D-Sorbit, D-Mannit, Dulcit,
(iv) Zuckersäuren umfassend D-Gluconsäure, D-Zuckersäure, D-Mannozuckersäure, Schleimsäure, D-Gluconsäuren, sowie die entsprechenden Lactone der genannten Zuckersäuren.

5. Zusammensetzung nach einem der Ansprüche 1 bis 4, **dadurch gekennzeichnet, dass** die O-funktionalisierten Kohlenhydrate ausgewählt sind aus aliphatischen Alkyl-O-Zuckerethern mit 1 bis 36 C-Atomen in der Alkyl-Gruppe, Glykosiden mit 1 bis 36 C-Atomen in der Alkyl-Gruppe, Zuckerestern mit 1 bis 36 C-Atomen in der Acyl-Gruppe und Gemischen der vorgenannten Verbindungen.

6. Zusammensetzung nach einem der Ansprüche 1 bis 5, **dadurch gekennzeichnet, dass** die O-funktionalisierten Kohlenhydrate ausgewählt sind aus Alkyl-O-Glucopyranosiden mit 1 bis 36 C-Atomen in der Alkyl-Gruppe, insbesondere mit 4 bis 20 C-Atomen in der Alkyl-Gruppe.

7. Zusammensetzung nach einem der Ansprüche 1 bis 6, **dadurch gekennzeichnet, dass** die O-funktionalisierten Kohlenhydrate ausgewählt sind aus Alkyl-O-D-Glucopyranosiden der linearen oder verzweigten Fettalkohole.

8. Zusammensetzung nach einem der Ansprüche 1 bis 7, **dadurch gekennzeichnet, dass** die Ether ausgewählt sind aus glycosidischen Monosaccharide und glycosidischen Oligosaccharide, insbesondere glycosidischen Disacchariden.

9. Zusammensetzung nach einem der Ansprüche 1 bis 8, **dadurch gekennzeichnet, dass** die Bismutvanadat (BiVO₄) enthaltende Pigmente optional zusätzlich mindestens ein Molybdän-Oxid, Wolfram-Oxid, Aluminium, Phosphor, Zirkon und/oder Eisen und Gemische der vorgenannten Komponenten enthalten.

10. Zusammensetzung nach einem der Ansprüche 1 bis 9, **dadurch gekennzeichnet, dass** die Bismutvanadat (BiVO₄) enthaltende Pigmente als Partikel mit einer Partikelgrößenverteilung von d₅₀ größer gleich 0,1 µm bis 10 µm vorliegen.

11. Zusammensetzung nach einem der Ansprüche 1 bis 10, **dadurch gekennzeichnet, dass** das O-funktionalisierte Kohlenhydrat umfasst
(i) Cetearyl-Glucoside, Ethylhexyl-Glucoside, Methylglucose Isostearat, Cetyl-Glucosid, Stearyl-Glucosid, Caprylyl-Glucosid, Lauryl-Glucosid, Cacryl-Glucoside, Myristyl Glucoside, Decyl-Glucoside, Coco-Glucoside (Kokosglucosid, Alkylpolyglucoside auf Basis von Kokosöl und Glucose), und/oder
(ii) Sorbitan Laurat, Sorbitan Stearat, Sorbitan Tristearat, Sorbitan Laurat, Sorbitan Sesquicaprylat, Sucrose Stearat.

12. Zusammensetzung nach einem der Ansprüche 1 bis 11, **dadurch gekennzeichnet, dass** die Bismutvanadat enthaltende Pigmente als Partikel mit O-funktionalisierten Kohlenhydraten oder Gemischen von O-funktionalisierten Kohlenhydraten umhüllt sind und einen Gehalt von 0,05 bis 50 Gew.-% O-funktionalisierte Kohlenhydraten oder ein Gemisch dieser und 99,95 bis 50 Gew.-% Bismutvanadat enthaltende Pigmente in der Gesamtzusammensetzung aufweisen.

13. Zusammensetzung nach einem der Ansprüche 1 bis 12, **dadurch gekennzeichnet, dass** die Bismutvanadat enthaltende Pigmente als Partikel mit O-funktionalisierten Kohlenhydraten oder Gemischen von O-funktionalisierten Kohlenhydraten umhüllt vorliegen und
a) die Differenz (dL) des Wertes L nach dem CIE-Lab-System vor und nach einer Lagerung der Pigmente über 7 Tage bei 18 bis 23 °C in einer wässrigen Erdalkali-Ionen und/oder Alkali-Ionen enthaltenden Lösung als Suspension bestimmt als dL = L (vor Lagerung) - L (nach Lagerung) einen Wert von dL = 18 bis 0 aufweist, und/oder
b) die Differenz (dL) des Wertes L nach dem CIE-Lab-System einer getrockneten Schicht der Pigmente vor und nach einem Kontakt mit einer wässrigen Erdalkali-Ionen und/oder Alkali-Ionen enthaltenden Lösung bei erhöhter Temperatur bestimmt als dL = L (vor Kontakt) - L (nach Kontakt) einen Wert von dL = 18 bis 0 aufweist, und/oder
c) die Differenz (dL) des Wertes L nach dem CIE-Lab-System vor und nach einem Kontakt mit einer wässrigen Erdalkali-Ionen und/oder Alkali-Ionen enthaltenden Lösung mit einem pH-Wert größer gleich 9 bestimmt als dL = L (vor Kontakt) - L (nach Kontakt) einen Wert von dL = 18 bis 0 aufweist.

14. Verfahren zur Herstellung der Zusammensetzung von mit O-funktionalisierten Kohlenhydraten oder Gemischen von O-funktionalisierten Kohlenhydraten umhüllten Bismutvanadat enthaltenden Pigmente, indem
- O-funktionalisierte Kohlenhydrate oder Gemischen von O-funktionalisierten Kohlenhydraten, ausgewählt sind aus Ethern- und/oder Estern von Kohlenhydraten, wobei die Kohlenhydrate ausgewählt sind aus Monosacchariden, Oligosacchariden mit zwei bis zehn Monosacchariden, Zuckeralkoholen, Zuckersäuren und Lactonen der Zuckersäuren, in Gegenwart eines protischen Fluides, insbesondere Wasser, mit
- partikulär vorliegenden Bismutvanadat enthaltenden Pigmenten gemischt werden.

15. Formulierung enthaltend eine Zusammensetzung nach einem der Ansprüche 1 bis 13 oder eine Zusammensetzung erhältlich nach Anspruch 14, **dadurch gekennzeichnet, dass** sie Bindemittel, Wasser sowie optional Additive und/oder Pigmente enthält.

16. Verwendung von O-funktionalisierten Kohlenhydraten, die ausgewählt sind aus Ethern- und/oder Estern von Kohlenhydraten sowie von Kohlenhydraten oder Gemischen zur Umhüllung von partikulären Bismutvanadat enthaltenden Pigmenten, wobei die Kohlenhydrate ausgewählt sind aus Monosacchariden, Oligosacchariden, Zuckeralkoholen, Zuckersäuren und Lactonen der Zuckersäuren.
